# EUROPEAN PATENT SPECIFICATION

(11) **EP 1 544 973 B1**
(45) Date of publication and mention of the grant of the patent: **08.09.2010**
(21) Application number: 03257911.2
(22) Date of filing: 16.12.2003
(51) Int. Cl.: H02H 7/085

(54) **Motor control system**
Motorsteuerungssystem
Système de commande de moteur

(43) Date of publication of application: 22.06.2005
(73) Proprietor: Yorkshire Technology Limited, Bradford West Yorkshire BD4 7BB (GB)
(72) Inventor: Ryecroft, Gary, Leeds LS8 1JH (GB)
(74) Representative: Waddington, Richard

(56) References cited:
- EP-A- 1 357 662
- DE-A- 4 211 495
- US-A- 4 900 994

## Description

This invention relates to a motor control system and to a method of operating a motor control system.

Capacitor-run motors are effectively 2 phase induction motors. They have two windings wound in a manner to optimise the available power source, namely a dual phase supply created from a single phase mains voltage source.

A capacitor in series with one of the windings creates a phase advance and hence a leading magnetic current in one of the motor windings creating a rotational force with good starting torque and load characteristics. Rotation in either direction is possible by simply connecting the source of supply to either of the motor windings with a common capacitor providing the phase-advanced connection to the other winding.

Commonly when used in very low duty-cycle situations, this type of motor is not rated for continuous operation and is equipped with a thermal trip device. To enable a single pole thermal switch to be used this is normally connected in series with the neutral supply line and is a self resetting device re-making the circuit when cooling has occurred. Also, adjustable limit switches are included to prevent over-travel of the motor/equipment in both directions.

Traditional control systems for such motors will usually apply power to the one of the motor terminals for a given period of time, which should enable the door (or other system) to travel to its intended limit. The control system has no knowledge of whether the correct travel, or indeed any travel has taken place. It also will not normally be aware of the operation of the thermal trip. The latter could be fairly simply detected by monitoring motor current, but this could be easily mistaken for the motor reaching its intended limit when the limit switch opens. Detection of a motor stall condition by monitoring current is not reliable, because the current drawn is dependent on the motor impedance and will not always give a correct result.

EP 1357662 discloses a motor control system for a closure mechanism based on the monitoring of the voltage levels measured at the motor terminals.

Such detection system is relatively inaccurate and is not capable of pre-detecting incipient stall conditions.

It is an object of the present invention to overcome the above limitations, as well as providing other control benefits without any intrusive modifications to existing motor systems. It is also an object to provide a system that could be retrofitted to an existing installation to provide greatly enhanced safety and control features.

Those objects are achieved by a motor control system and method according to claim 1 and 7, wherein the electrical signal detection means are adapted to reference a waveform of an input power supply as a synchronising signal. Preferably, a variable duration window is used to reference the waveform. The duration of the window is preferably reduced once the waveform has been referenced. The window is preferably moved across the waveform.

Preferably the electrical signal detection means are operable to detect waveform of signals in the circuitry and/or variations of waveforms in said circuitry. The electrical signal detection means preferably incorporate at least one opto-coucler operable to supply electrical signals to a microprocessor of the motor control system.

There are four opto-couplers, preferably for first limit detection, second limit detection, stall/load detection, and thermal/trip relay weld detection.

Preferably the closure mechanism is a door or gate, such as a roller door. Preferably, the limit switches are adapted to trigger at opposite ends of travel of the closure mechanism, such as a limit of clockwise travel and a limit of counter clockwise travel.

The electrical signal detection means are preferably adapted to detect conditions of closure mechanism corresponding to the motor running in a first direction, the motor running in a second direction, a limit of travel of the closure mechanism reached for the first direction of travel, a limit of travel of the closure mechanism reached for the second direction, a thermal trip of the motor running in the first or the second direction, an onset of stall condition, a near stall condition, and/or a stall condition.

The invention extends to a closure mechanism including a motor control system and motor as described in the first aspect.

The invention extends to a motor control system and motor as described in the first aspect.

The motor may be a bi-directional motor, such as a capacitor run motor or a two phase induction motor.

According to a second aspect of the invention a method of controlling a closure mechanism motor comprises referencing waveforms carried in electrical circuitry of a motor control system, where the relative state of a plurality of waveforms is used to infer the operational state of the closure mechanism motor.

Preferably at least two sensors, preferably opto-detectors, are used to sense the waveforms.

Preferably the sensed waveforms are referenced to an input power supply.

Preferably the method includes waiting for a trigger signal to commence a timing sequence, said timing signal being searched in a timing window. The window size may be reduced after the timing signal has been detected.

All of the features described herein may be combined with any of the above aspects, in any combination.

For a better understanding of the invention, and to show how embodiments of the same may be carried into effect, reference will now be made, by way of example, to the accompanying diagrammatic drawings in which:
Figure 1 is a schematic circuit diagram of a motor control system and motor, including various detected waveforms for different modes of operation of the control;
Figure 2 is a partial view of circuit diagram shown in Figure 1 showing the connections and waveforms for a second configuration of the circuit;
Figure 3 is a partial view of circuit diagram shown in Figure 1 showing the connections and waveforms for a third configuration of the circuit;
Figure 4 is a partial view of circuit diagram shown in Figure 1 showing the connections and waveforms for a fourth configuration of the circuit;
Figure 5 is a partial view of circuit diagram shown in Figure 1 showing the connections and waveforms for a fifth configuration of the circuit;
Figure 6 is a partial view of circuit diagram shown in Figure 1 showing the connections and waveforms for a sixth configuration of the circuit;
Figure 7 is a partial view of circuit diagram shown in Figure 1 showing the connections and waveforms for a seventh configuration of the circuit;
Figure 8 is a partial view of circuit diagram shown in Figure 1 showing the connections and waveforms for a eighth configuration of the circuit;
Figure 9 is a partial view of circuit diagram shown in Figure 1 showing the connections and waveforms for a ninth configuration of the circuit;
Figure 10 is a partial view of circuit diagram shown in Figure 1 showing the connections and waveforms for a tenth configuration of the circuit;
Figure 11 is a partial view of circuit diagram shown in Figure 1 showing the connections and waveforms for a eleventh configuration of the circuit;
Figure 12 is a partial view of circuit diagram shown in Figure 1 showing the connections and waveforms for a twelfth configuration of the circuit;
Figure 13 is a partial view of circuit diagram shown in Figure 1 showing the connections and waveforms for an overload configuration of the circuit; and
Figure 14 is a schematic waveform diagram showing mains, capacitor and opto-detector waveforms and timing information.

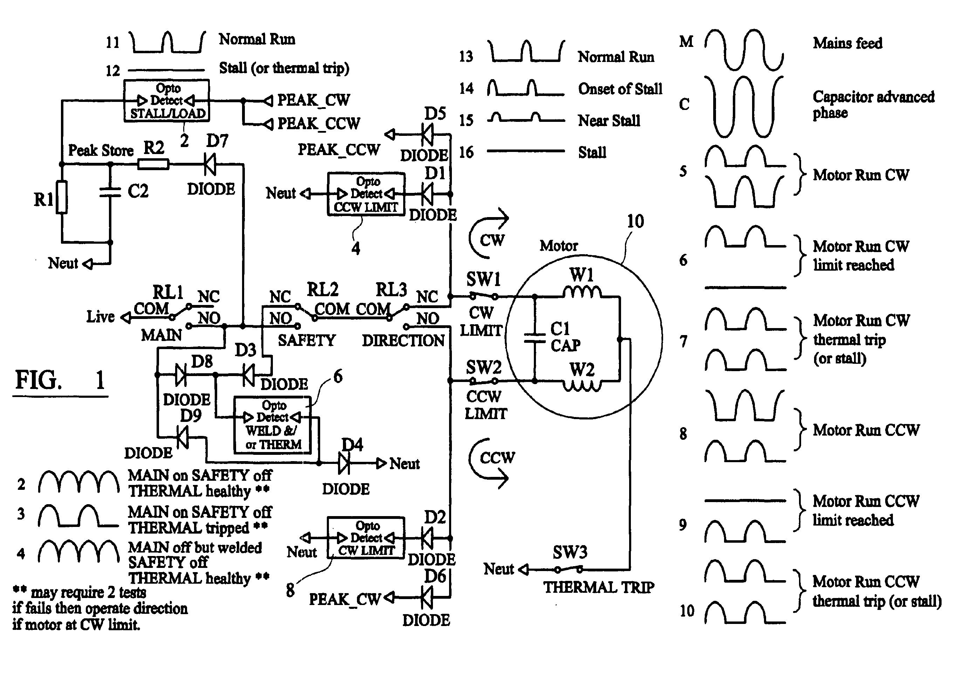

In Figure 1 a motor is shown comprising windings W1 and W2 and a capacitor C1. An electric supply is shown schematically by its connections as NEUT and LIVE. Connections to neutral are also shown for a diode D4 to NEUT and also an opto-detector referenced CW LIMIT 8, a thermal trip switch SW3 and also a counter clockwise limit switch opto-detector labelled CCW LIMIT 4.

The circuitry comprises four opto-detectors: a first labelled STALL/LOAD 2 to detect a stall/excessive load condition; the second referred to above, labelled CCW LIMIT to detect a counter clockwise limit of travel of a door (not shown) controlled by the motor 10; a third opto-detector is labelled CW LIMIT to detect a limit of travel of the door in a clockwise sense of rotation; and a fourth opto-detector labelled WELD &/or THERM 6 is used to detect a welding of a relay labelled RL1 or a thermal tripping thereof. The opto-detectors take information from a clockwise limit switch SW1, a counter clockwise limit switch SW2, a thermal trip SW3, relays RL1 to RL3, diodes D1 to D8, capacitors C1 and C2 and resistors R1 and R2, as well as waveform amplitudes to detect clockwise and counter clockwise limits of travel, stalling of the motor, increased load on the motor, relay faults and, thermal tripping of the motor.

The opto-detectors, or opto-couplers, comprise an LED that is illuminated via a signal that is current limited using a series resistor (not shown). A phototransistor then switches when the LED is illuminated. The switching of the phototransistor provides a signal to indicate that the opto-detector has a signal input. The opto-detectors advantageously allow the isolation of the detection signals passed to a microprocessor for processing from the larger voltage and current required by the motor.

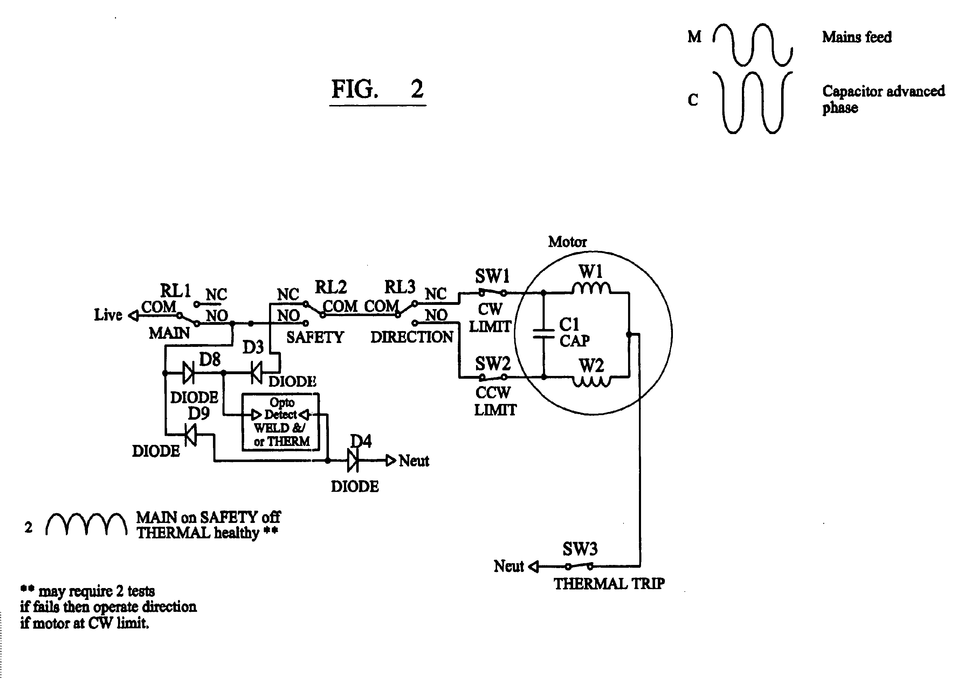

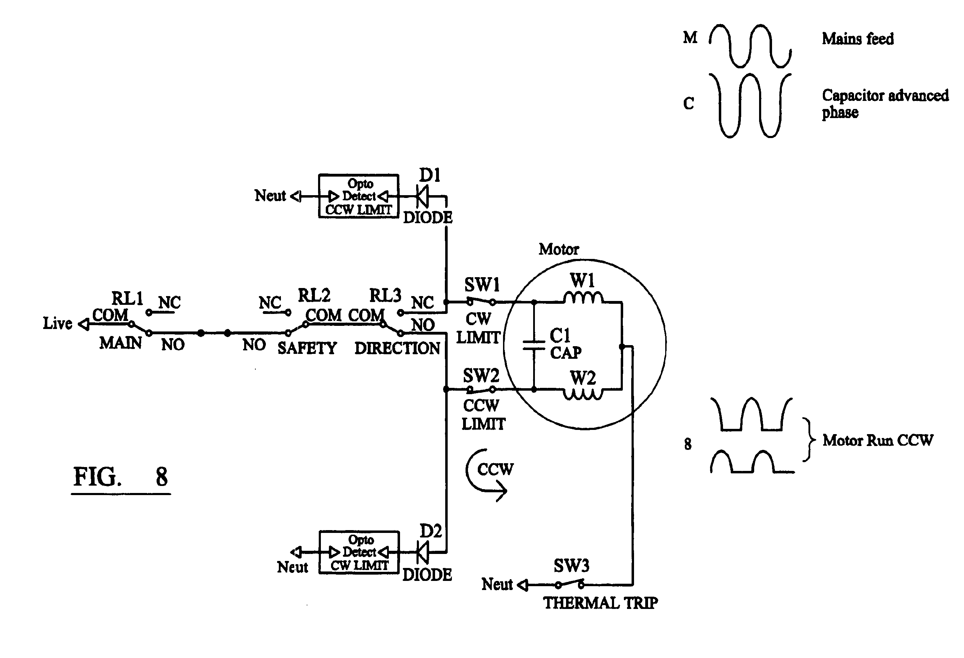

In Figure 1 waveforms with reference numerals 2 to 16 show waveforms which will be detected for particular circumstances experienced in the circuitry. Further discussion of these waveforms will be made in relation to Figures 2 to 13. The waveform labelled M is the wave form received from the main supply. The waveform labelled C is the phase-advanced waveform present at the capacitor labelled C1.

Figure 1 shows the circuitry in the first condition, condition 1. The main relay, RL1, is switched to an off state, meaning that the circuit is in a quiescent state without any faults or conditions existing. In this state there will be no signals from any of the opto-detectors STALL/LOAD, WELD &/or THERM, CCW LIMIT or CW LIMIT.

The basic principle involved is monitoring of mains and motor waveforms using the opto-couplers described above, although alternative techniques for monitoring the mains voltages could be applied.

To synchronise the waveforms for analysis by a microprocessor a sync signal is derived from the mains transformer (not shown) used to run the various control circuits. Alternatively, a further opto-coupler or other means could be used to derive this signal. The waveforms shown in the figure are shown as starting at this synchronising point where the mains feed signal rises positively through zero. Any other suitable moment in the waveform could be alternatively used, provided it is locked in time to the incoming mains signal.

Assumed starting conditions are as follows:-
1 All relays de-energised (all contacts normally closed) and capable of normal operation, no faults existing.
2 Motor in mid travel with both limit switches CW LIMIT and CCW LIMIT closed.
3 Motor in cool condition, thermal trip SW3 closed for normal running.
4 Mains "Live" is connected to the common (COM) of RL1.
5 Mains "Neutral" connected to the non-motor end of the thermal trip SW3 and also to four further connection points labelled Neut providing return paths for signal monitoring.

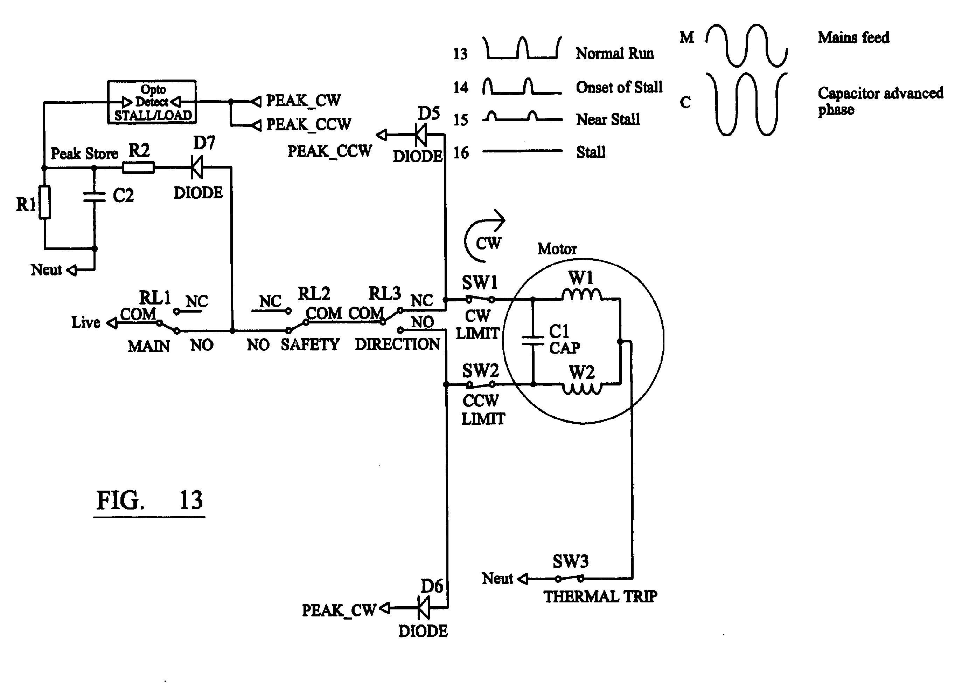

Further particular features of the operation of the circuitry are shown in Figures 2 to 13. In these figures only the relevant parts of the circuit are shown for clarity, together with the relevant wave forms 2 to 16 shown in Figure 1. Each of the figures shows a condition, labelled condition 2 through to condition 12 with a final condition of overload condition shown in Figure 13. These conditions are described as follows.

### Condition 2

This condition is detected when RL1 is connected to MAIN, SAFETY at RL2 is not connected and the thermal trip SW3 is untripped.

In Figure 2, RL1 is energised, the motor thermal trip SW3 is in normal run (cold) closed state.

A waveform 2 will be detected by opto-coupler "WELD &/or THERMAL".

Rectified mains flowing through diode D8 into the opto-coupler and returning to neutral via diode D4 gives detection of the first half cycle.

The second half cycle is detected by current flowing from neutral through either or both the motor winding W1 and C1, through SW1 CW LIMIT, through the normally closed RL3 contact, through the normally closed RL2 contact through diode D3 into the opto-coupler "WELD &/or THERMAL" and returning to live via diode D9.

These safety measurements are made before power is supplied to the motor.

### Condition 3

This condition applies when the thermal trip SW3 is tripped.

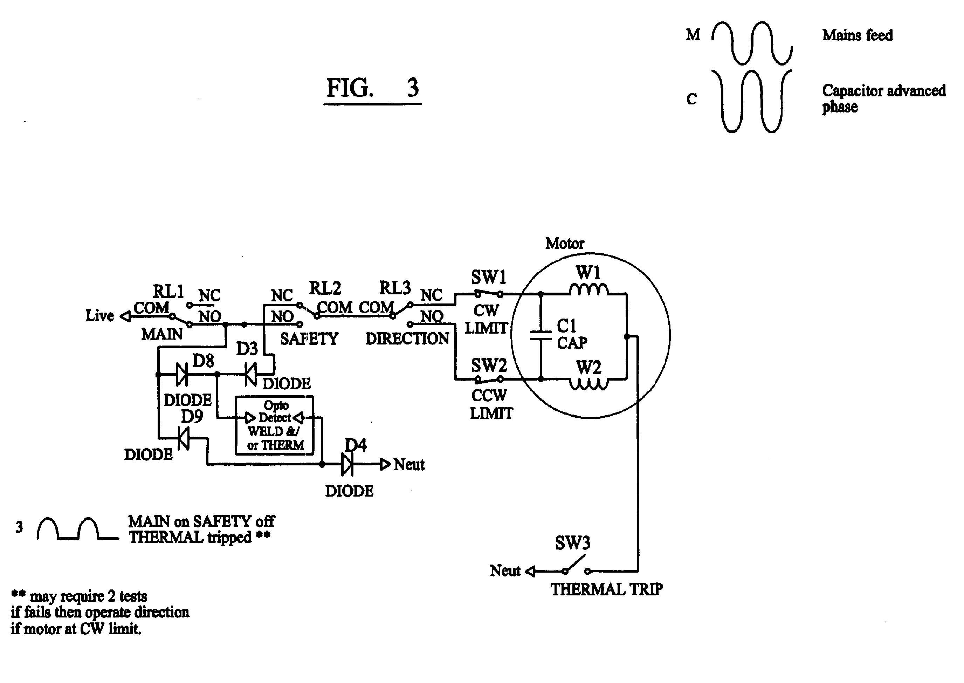

In Figure 3, RL1 is energised and thermal trip SW3 is operated ie in (hot) open state.

A waveform 3 will be detected.

The first half cycle detected as in Condition 2.

The second half cycle will be missing due to the absence of a neutral signal through the tripped thermal trip SW3.

Other fault conditions can possibly generate this waveform but the results obtained from further signals not yet mentioned will clarify the result.

### Condition 4

This condition occurs when RL1 is connected to MAIN, but is welded on. The thermal trip SW3 is untriggered.

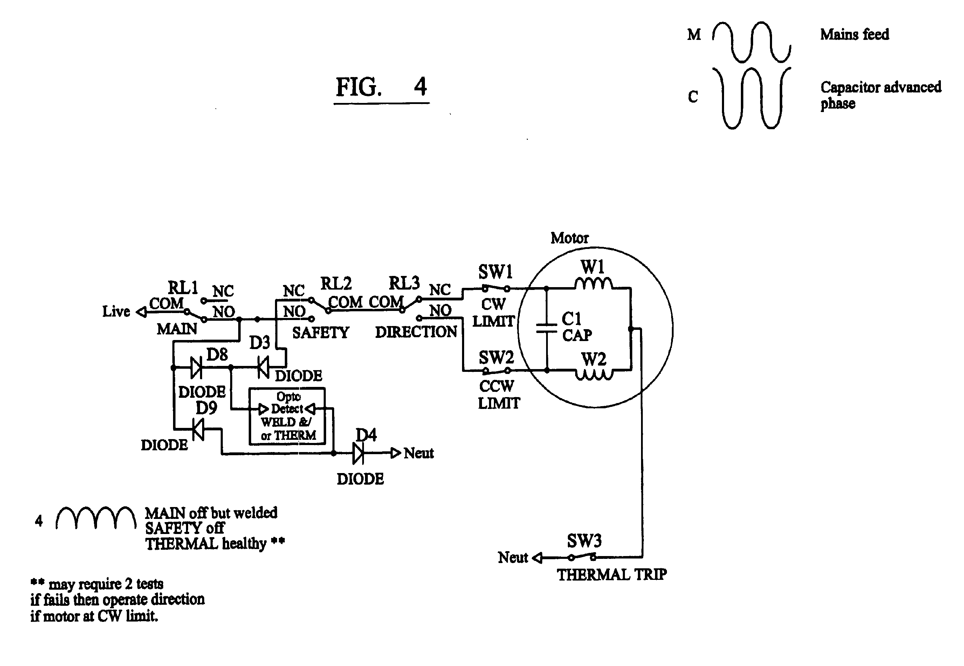

In Figure 4, a waveform 4 will be detected prior to ever operating RL1, as the contact is faulty and welded closed.

In this condition the motor is still not driven because of the high impedance of WELD &/or THERM path through RL2 NC. RL2 is provided as a safety switch. In the de-energised state RL2 provides a sensing-current-only switch path between the direction selection relay RL3 and the main relay RL1; this is limited to approximately 1mA and is wholly insufficient to run the motor. RL2 and RL3 are only operated when RL1 is switched off.

### Condition 5

This condition shows that the motor is running clockwise (CW).

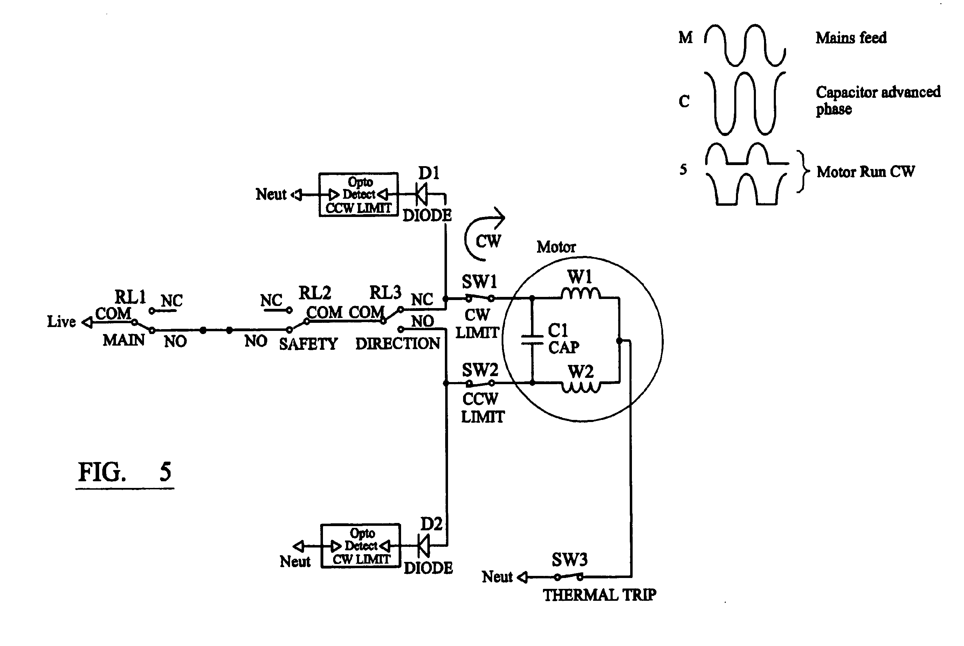

In Figure 5, RL1 is de-energised, RL2 is energised (following prior successful test of RL1 etc.).

RL1 is then re-energised as it is the normal powering relay.

The waveforms 5 will be detected.
The in-phase half cycle will be detected by current from live passing through RL1 (NO), RL2 (NO), RL3 (NC), diode D1 into the opto-coupler CCW LIMIT and returning to neutral.

The leading-phase half cycle will be detected by current from live passing through RL1 (NO), RL2 (NO), RL3 (NC) SW1, C1, SW2, diode D2 into the opto-coupler CW LIMIT and returning to neutral.

### Condition 6

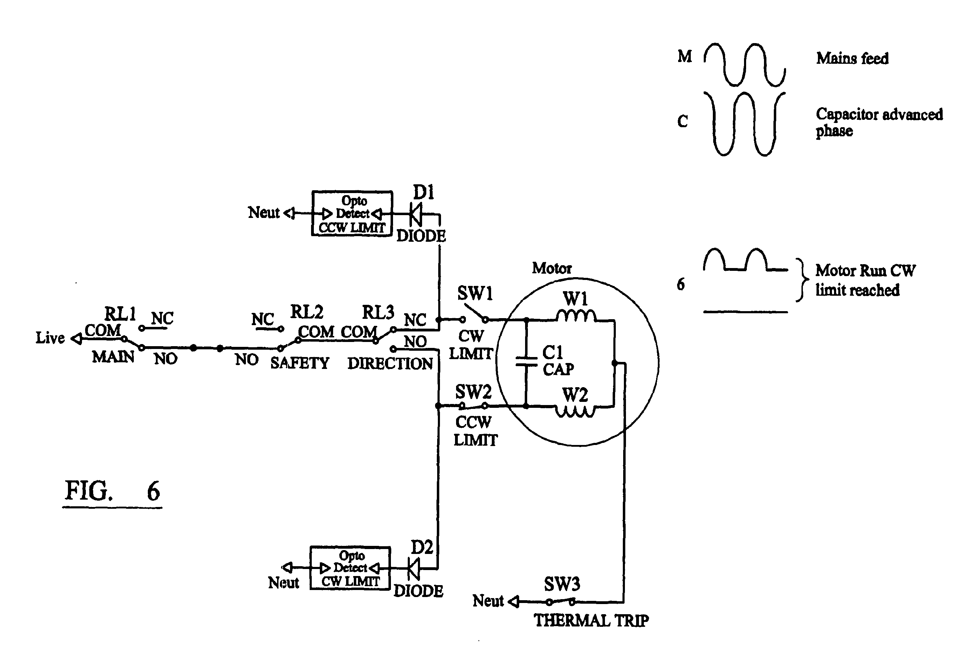

This condition shows that the motor running clockwise has reached its limit of travel. In Figure 6, RL1 is energised, RL2 is energised, SW1 CW LIMIT opens when the limit of travel of the door is reached. The waveforms 6 will be detected.

The in-phase half cycle will be detected by current from live passing through RL1 (NO), RL2 (NO), RL3 (NC), diode D1, into the opto-coupler CCW LIMIT and returning to neutral.

The leading-phase half cycle will not be detected as SW1 opening isolates the path into the opto-coupler CW LIMIT and returning to neutral.

### Condition 7

This condition shows a thermal trip or stall of a clockwise running motor.

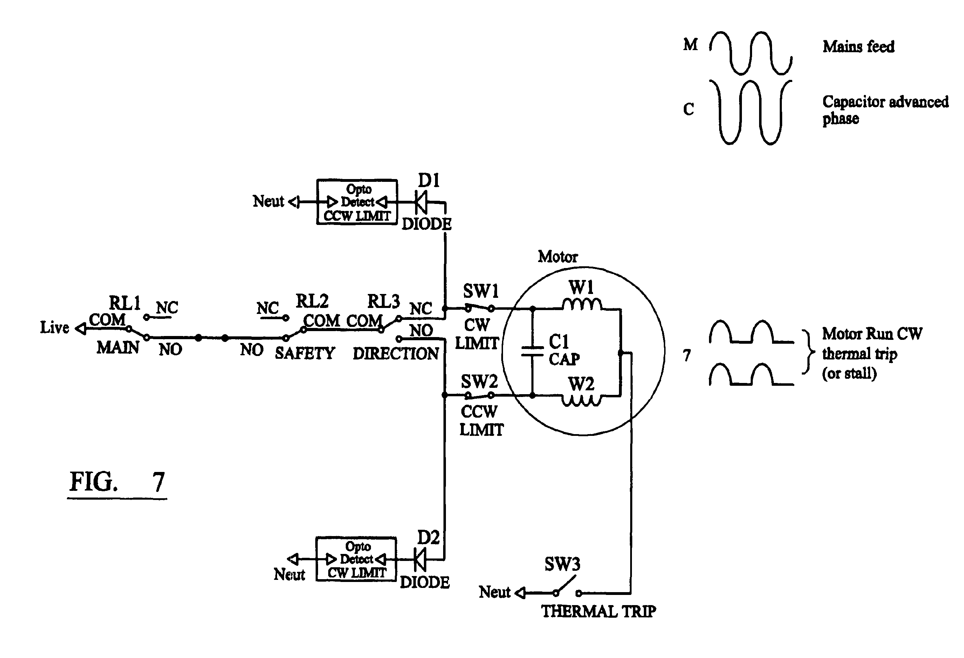

In Figure 7, RL1 is energised, RL2 is energised, SW1 is still closed, and SW3 thermal trip operates and opens.

The waveform 7 will be detected. Without any current flowing through the windings to neutral the virtually zero current through C1 will produce negligible phase shift so the detected waveform will all but synchronise with the mains supply waveform. A stall would also cause an almost identical detection, as the loading of Winding 2 (W2) in stall will negate the phase advance through C1. After the removal of power by the control system following fault detection, a "cold" test as in Condition 3 will confirm the status.

### Condition 8

This condition shows the motor is running counter clockwise (CCW).

RL1 is de-energised, RL2 is energised (following prior successful test of RL1 etc.), RL3 is energised to select CCW direction. RL1 is then re-energised as it the normal powering relay. The waveform 8 will be detected.

The in-phase half cycle will be detected by current from live passing through RL1 (NO), RL2 (NO), RL3 (NO), diode D2 into the opto-coupler CW LIMIT and returning to neutral.

The leading-phase half cycle will be detected by current from live passing through RL1 (NO), RL2 (NO), RL3 (NO) SW2, C1, SW1, diode D1 into the opto-coupler CCW LIMIT and returning to neutral.

### Condition 9

This condition indicates that the limit of counter clockwise movement has been reached.

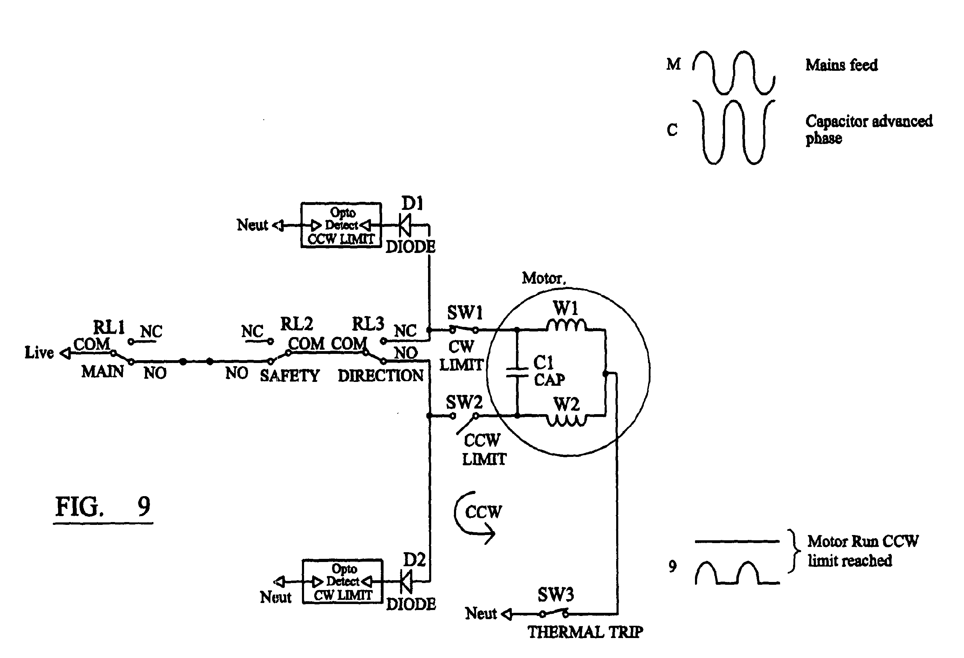

In Figure 9, RL1 is energised, RL2 is energised RL3 is energised, and SW2 CCW LIMIT opens when the limit of travel of the door is reached. The waveform 9 will be detected.

The in-phase half cycle will be detected by current from live passing through RL1 (NO), RL2 (NO), RL3 (N0), diode D2 into the opto-coupler CCW LIMIT and returning to neutral.

The leading-phase half cycle will not be detected as SW2 opening isolates the path into the opto-coupler CCW LIMIT and cause current to return to neutral. This condition detects the counter-clockwise limit being reached.

### Condition 10

This condition indicates that the thermal trip SW3 has been triggered, or a stall, when the motor is running counter clockwise.

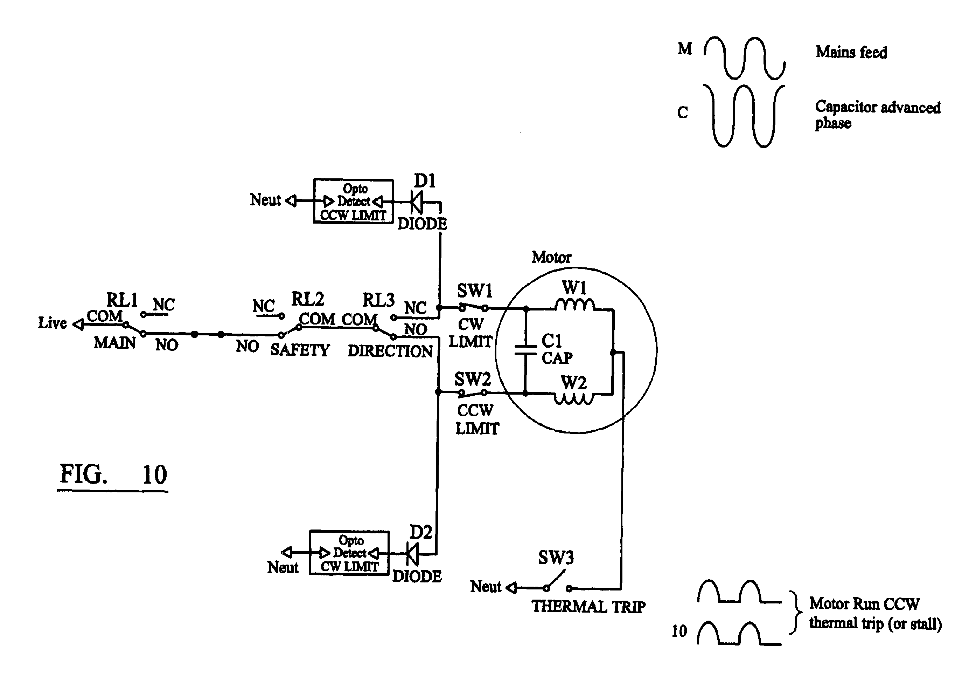

In Figure 10, RL1 is energised, RL2 is energised, SW2 is still closed, and the SW3 thermal trip operates.

The waveform 10 will be detected. Without any current flowing through the windings to neutral the virtually zero current through C1 will produce negligible phase shift, so the input waveform and the detected waveform will all but synchronise. A stall would also cause an almost identical detection, as the loading of winding 1 (W1) in stall will negate the phase advance through C1. After the removal of power by the control system following fault detection, a "cold" test as in Condition 3 will confirm the status.

### Condition 11

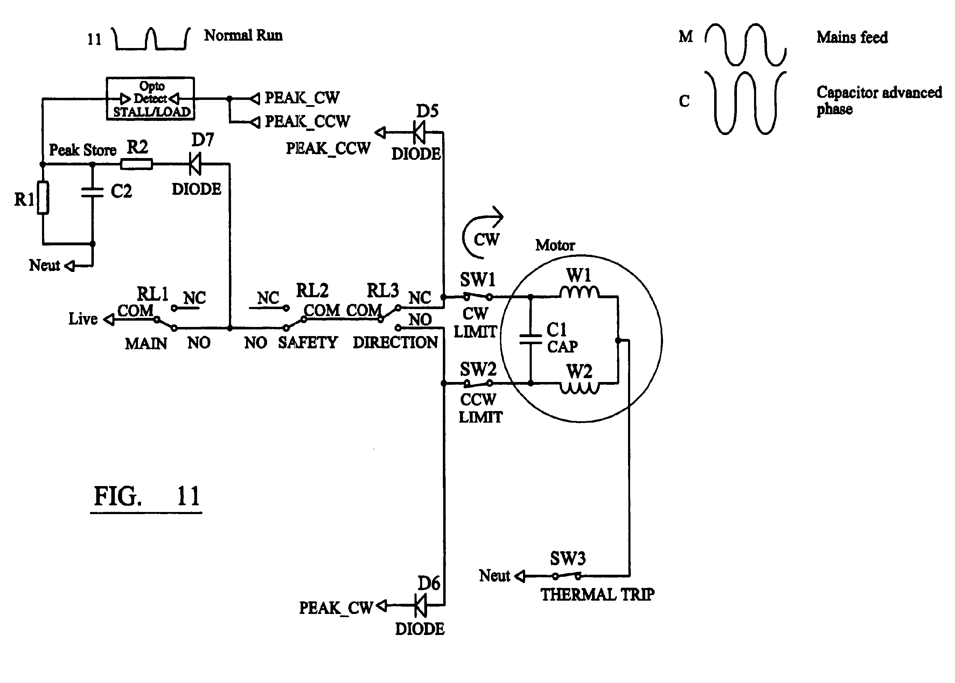

In Figure 11, the motor is powered and running normally in either direction.

The waveform 11 will be detected. The mains flowing through energised RL1 (NO) passes and rectifies through diode D7 and then is filtered via R2 onto C2 (R1 is just a discharge resistor). This stores a filtered peak value of the mains voltage.

The peak of the waveform detected through diode D5 or diode D6 will have a greater voltage than the mains voltage caused by the effect of the reactance of the motor winding in series resonating with C1. This will be true regardless of motor direction, in a clockwise direction via SW2 and D6 or in counter clockwise direction via SW1 and diode D5.

The higher voltage from diode D5 or diode D6 drives opto-coupler STALL/LOAD via R1 & C2.

### Condition 12

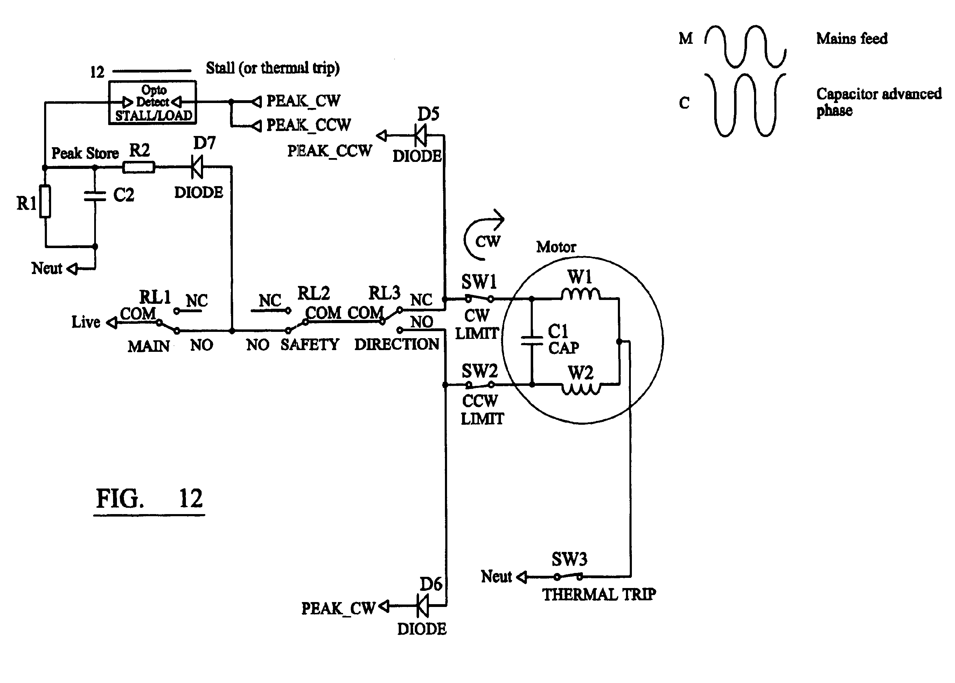

This condition shows that the motor is powered and stalled in either direction, see Figure 12.

The waveform 12 will be detected. The mains flowing through energised RL1 (NO) passes and rectifies through diode D7 and then is filtered via R2 onto C2 (R1 is just a discharge resistor). This still stores a filtered peak value of the mains voltage.

However the virtual collapse of inductive reactance of the winding currently in series with C1 will cause the normally elevated voltage through diode D5/D6 to collapse and the current through the opto-coupler STALL/LOAD will collapse and the signal disappear.

### Overload Condition

So far we have discussed absolute detection conditions. However the change from normal running signals to stall is dynamic. The normal run signal of 11 diminishes in amplitude and time duration as load increases. Its phase advance with respect to the mains waveform also diminishes. By controlling the microprocessor monitoring the precise timing of the waveforms, overload conditions can be detected by waveforms 13, 14, 15, and 16, which show the onset of a stall at 14, near stall at 15 and a stall at 16.

By use of this detection it is possible to pre-detect an absolute stall, take appropriate action and probably avoid the resultant rapid motor heating of a full stall, and the inevitability of thermal trip. This is important so that the motor can be still run in reverse and free the entrapped item that was causing the stall condition.

An equivalent effect also happens to the limit detection signals as phase advance and amplitude reduce. This too can be detected, the onset is however less pronounced.

A microprocessor (not shown) is used by means of the opto-detectors to detect the waveforms referred to above and to analyse those waveforms to detect which condition the motor is in. For example a near stall condition could be detected and if the motor is reversed a full stall may be avoided. Software is programmed to look for the outputs of the optocouplers. Each combination of optocoupler outputs from the four optocouplers and an optocoupler for the mains supply is analysed by the software against a standard set of outputs produced for all possible combinations. Thus, with conditions 1 to 12 and overload described above the software programmed into the microprocessor discriminates between possible outputs to determine what condition the system is in. After that, routines are called in the software depending on the identified condition, i.e. if a stall is detected then reversing the door movement could be initiated, or if excess load is detected, then the motor could be stopped.

The basis of the timing is to check for a signal going high on the mains reference to commence a timing procedure. All subsequent timings are taken from that timing point. The software detects the mains going to the positive part of the sine wave.

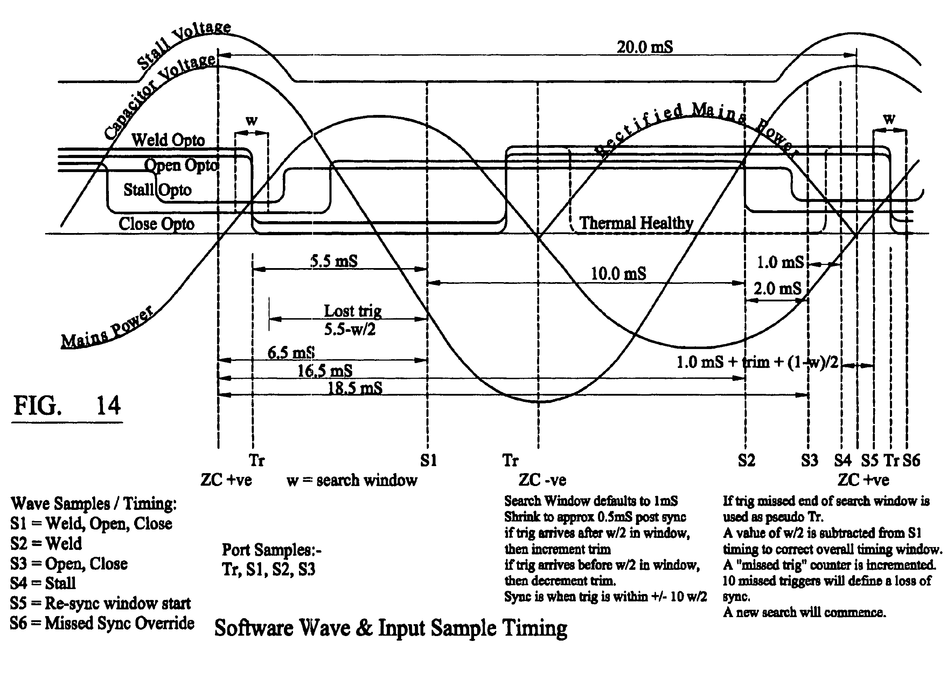

Figure 14 shows the timings that are used based on the mains and capacitor waveforms. The figure also shows the behaviour of the four opto-detectors in relation to the mains supply. The reference to open opto and close opto are to CW LIMIT and CCW LIMIT respectively.

Figure 14 shows example timings that are taken when synchronisation has occurred and the motor is running in the closing direction. Tr represents the start of the timing approximately 1mS after the mains voltage cycle goes positive. S1 5.5 mS after Tr, is used to check that the WELD &/OR THERM and OPEN opto-detector outputs are low and the CLOSE opto-detector output is high.

S2, 10ms after S1, is a timing point to check that the WELD &/OR THERM opto-detector output is high.

S3, 2ms after S2, is used to check that the CLOSE opto-detector output is low and the OPEN opto-detector output is high.

S4, 1.0ms after S3, checks that the STALL/LOAD opto-detector output ist low.

Over a complete cycle, or a number of complete cycles, the outputs of the opto-detectors at the timing steps S1 to S4 are compared to determine the state of the control system.

Between S5 and S6 in Figure 14 it may be that the sync signal Tr is repeatedly missed. If this occurs a new search to locate Tr will commence. To do this, and to start from scratch, a search window of duration 1ms is used to find the trigger at subsequent oscillations of the mains supply. All timings are taken from the trigger. If the trigger, Tr, is seen in the 1ms window then the window size is halved to 0.5ms. If Tr is not detected at the next oscillation (20.0ms later in Figure 14), then the window is widened again for the next oscillation. Thus, the window may constantly narrow and widen depending on whether the trigger is identified. The variation of the window and constant updating is a particularly advantageous feature of the system.

If the trigger signal arrives in the second half of the window, then the window is moved forwards for the next cycle to ensure the window is more central on the trigger. Conversely, if the trigger is in the first part then the window is moved back. The sync signal Tr is taken to have occurred if it falls within the window width. If Tr is missed, the end of the window is taken as the trigger Tr. A value of w/2 is subtracted from S1 to correct the overall timing window. If a number of triggers are missed a new search is commenced.

To allow for missed detections and bearing in mind an operating frequency of 50Hz, several cycles can be missed before action need be taken. Thus when a particular signal is detected 10 times for example, to indicate a stall, it is assumed to be correct. If only one oscillation period indicated a stall, then it could be ignored and assumed to be an error.

The signals described above have been compared with AC source waveforms. The effect, however of processing the signals though opto-couplers is to cause a "squaring" of the waveform shape so near square waveforms are presented to the microprocessor. These signals are further optimised for precise timing and minimal jitter by the use of Schmitt trigger inputs on the microprocessor. The signal transition, ie Tr, occurs at approximately 25% of peak voltage. The waveforms are as shown in Figure 14. The vertical scales of the digital signals representing the opto-coupler outputs have been compressed to provide clarity in Figure 14, but all are "rail to rail" signals applied to the microprocessor inputs.

The "W" window referred to is the 1.0ms window generated in software to enable perfect synchronisation with the mains AC waveform. The S5 and S6 timing points are not true measuring points but software timings to provide a closely controlled dynamic window for the synchronisation. The window "W" is reduced in width dynamically under software control to provide a narrow window of opportunity to capture the mains post-zero transition. The narrow window provides a very limited time range for the interrupt to occur and hence gives the system high noise immunity.

A similar principal of synchronisation can alternatively be used detecting the span of the output of the opto-coupler and deriving a centre of peak detection sync point. The same dynamic detection technique can be applied but detecting two rather than one detection points (rising and falling).

The signals measured at the inputs are digitally filtered in software to again further enhance noise immunity. The resultant signals obtained at S1, S2, S3, and S4 are then considered by the software routines. From these input states and the various modes of operation, the software can define the precise running / load state of the motor and hence the servo-loop control environment of the motor is created rather than the open loop historical style systems.

The system is capable of self-learning, because an initial set up is done with standard timings for the waveforms, following which, and after the system is fitted to a door installation, the standard timing values for a stall are then replaced by searching back to the critical timing point. Also, the self learning facility is advantageous for opto-couplers that have a manufacturing tolerance, as is usual.

By precision measurement of the timings of the above signals accurate information as described can be achieved.

A particular advantage of the system is the ability to use a pulse train, or the detected waveforms, to pre-detect stalls etc. The pulses are referenced by voltage and time. If, for example, a stall is detected phase changes occur that are accurately detected to develop a diagnosis of the factors that are causing the changes.

The apparatus discussed can be used to detect bodily entrapment or adverse loading on the shutter. The software can then enact safety and or release protocols.

The design is primarily suited to permanent capacitor run motors used initially in the movement of roller shutter doors, gate control systems, other reversible closure devices, including reversible covers and other devices.

The prime advantages of the system described are as follows: -
- 1: Provide detection of primary relay failure (relay weld).
- 2: Provide detection of motor thermal trip condition.
- 3: Provide detection of a motor reaching its designated travel limits in both directions.
- 4: Provide detection of motor stall condition.
- 5: Provide dynamic load monitoring to detect abnormal motor load.

## Claims

1. A motor control system for a closure mechanism comprises electrical circuitry including first and second limit detectors, a thermal detector and electrical signal detection means, all of which are electrically connected to a motor (10) to be controlled, wherein the electrical signal detection means are operable to detect variations in electrical signals in the circuitry indicative of one or more of a limit of travel of the closure mechanism being reached, a stall condition or a thermal trip, **characterized in that** the electrical signal detection means are operable to detect waveforms (2-16) of an input power supply as a synchronising signal.

2. A motor control system as claimed in claim 1, wherein the electrical signal detection means incorporate at least one opto-coupler operable to supply electrical signals to a microprocessor of the motor control system.

3. A motor control system as claimed in any preceding claim, wherein there are four opto-couplers; preferably for first limit detection, second limit detection, stall/load detection and thermal trip/relay weld detection.

4. A motor control system as claimed in any preceding claim, wherein a variable duration window is used to reference the waveform (2-16).

5. A motor control system as claimed in any preceding claim, wherein the electrical signal detection means are adapted to detect conditions of closure mechanism corresponding to the motor (10) running in a first direction, the motor (10) running in a second direction, a limit of travel of the closure mechanism reached for the first direction of travel, a limit of travel of the closure mechanism reached for the second direction, a thermal trip of the motor (10) running in the first or the second direction, an onset of stall condition, a near stall condition, and/or a stall condition.

6. A closure mechanism including a motor control system and motor (10) as described in any one of claims 1 to 5.

7. A method of controlling a closure mechanism motor (10) comprising referencing waveforms (2-16) carried in electrical circuitry of a motor control system, where the relative state of a plurality of waveforms is used to infer the operational state of the closure mechanism motor (10), wherein the relative state of the plurality of waveforms is used to infer one or more of a limit of travel of the closure mechanism being reached, a stall condition or a thermal trip, **characterized in that** the waveforms are waveforms of an input power supply which are referenced as a synchronising signal.

8. The method of claim 7, wherein includes waiting for a trigger signal to commence a timing sequence, said timing signal being searched in a timing window.

## Patentansprüche

1. Motorsteuerungssystem für einen Schließmechanismus, der eine elektrische Schaltungsanordnung umfasst, die einen ersten und zweiten Grenzdetektor, einen Wärmedetektor und Detektionsmittel für elektrische Signale enthält, die alle elektrisch mit einem zu steuernden Motor (10) verbunden sind, wobei die Detektionsmittel für elektrische Signale dahingehend betrieben werden können, Folgendes zu detektieren: Variationen in elektrischen Signalen in der Schaltungsanordnung, die anzeigen, dass eine oder mehrere einer Bewegungsgrenze des Schließmechanismus erreicht ist, einen Abrisszustand oder eine thermische Auslösung, **dadurch gekennzeichnet, dass** die Detektionsmittel für elektrische Signale dahingehend betrieben werden können, Wellenformen (2-16) einer Eingangsstromversorgung als ein synchronisierendes Signal zu detektieren.

2. Motorsteuerungssystem nach Anspruch 1, wobei die Detektionsmittel für elektrische Signale mindestens einen Optokoppler enthalten, der dahingehend betrieben werden kann, elektrische Signale an einen Mikroprozessor des Motorsteuerungssystems zu liefern.

3. Motorsteuerungssystem nach einem vorhergehenden Anspruch, wobei es vier Optokoppler gibt; bevorzugt für die erste Grenzdetektion, die zweite Grenzdetektion, die Abriss-/Lastdetektion und die thermische Auslösungs-/Relaisschweißdetektion.

4. Motorsteuerungssystem nach einem vorhergehenden Anspruch, wobei ein Fenster variabler Dauer verwendet wird, um die Wellenform (2-16) zu referenzieren.

5. Motorsteuerungssystem nach einem vorhergehenden Anspruch, wobei die Detektionsmittel für elektrische Signale dafür ausgelegt sind, Folgendes zu detektieren: Zustände des Schließmechanismus, die dem entsprechen, dass der Motor (10) in einer ersten Richtung läuft, der Motor (10) in einer zweiten Richtung läuft, eine Bewegungsgrenze des Schließmechanismus für die erste Bewegungsrichtung erreicht ist, eine Bewegungsgrenze des Schließmechanismus für die zweite Richtung erreicht ist, eine thermische Auslösung des Motors (10), der in der ersten oder der zweiten Richtung läuft, ein Einsetzen eines Abrisszustands, einen Nahe-Abriss-Zustand und/oder einen Abrisszustand.

6. Schließmechanismus mit einem Motorsteuerungssystem und Motor (10) nach einem der Ansprüche 1 bis 5.

7. Verfahren zum Steuern eines Schließmechanismusmotors (10) umfassend das Referenzieren von Wellenformen (2-16), die in der elektrischen Schaltungsanordnung eines Motorsteuerungssystems geführt werden, wobei der relative Zustand von mehreren Wellenformen dazu verwendet wird, auf den Arbeitszustand des Schließmechanismusmotors (10) zu schließen, wobei der relative Zustand der mehreren Wellenformen verwendet wird zum Schließen auf eine oder mehrere einer erreichten Bewegungsgrenze des Schließmechanismus, eines Abrisszustands oder eines thermischen Auslösens, **dadurch gekennzeichnet, dass** Wellenformen Wellenformen einer Eingangsstromversorgung sind, die als ein synchronisierendes Signal referenziert sind.

8. Verfahren nach Anspruch 7, wobei das Verfahren das Warten darauf beinhaltet, dass ein Auslösersignal eine Zeitsteuersequenz beginnt, wobei die Zeitsteuersequenz in einem Zeitsteuerfenster gesucht wird.

## Revendications

1. Système de commande de moteur électrique destiné à un mécanisme de fermeture comprenant des circuits électriques comportant des premier et deuxième détecteurs de limite, un détecteur thermique et des moyens de détection de signaux électriques qui sont tous électriquement connectés à un moteur électrique (10) devant être commandé, dans lequel les moyens de détection de signaux électriques ont pour fonction de détecter des variations de signaux électriques dans les circuits, qui sont représentatives d'un ou plusieurs du fait qu'une limite de déplacement du mécanisme de fermeture est atteinte, d'une condition de calage ou d'un déclenchement thermique, **caractérisé en ce que** les moyens de détection de signaux électriques ont pour fonction de détecter des formes d'ondes (2-16) d'une alimentation électrique d'entrée en tant que signal de synchronisation.

2. Système de commande de moteur électrique selon la revendication 1, dans lequel les moyens de détection de signaux électriques comportent au moins un coupleur optique ayant pour fonction de délivrer des signaux électriques à un microprocesseur du système de commande de moteur électrique.

3. Système de commande de moteur électrique selon l'une quelconque des revendications précédentes, dans lequel quatre coupleurs optiques sont présents, de préférence pour la première détection de limite, la deuxième détection de limite, la détection de calage/charge et la détection de déclenchement thermique/collage de relais.

4. Système de commande de moteur électrique selon l'une quelconque des revendications précédentes, dans lequel une fenêtre de durée variable est utilisée comme référence pour la forme d'onde (2-16).

5. Système de commande de moteur électrique selon l'une quelconque des revendications précédentes, dans lequel les moyens de détection de signaux électriques sont conçus pour détecter des états du mécanisme de fermeture qui correspondent au fait que le moteur électrique (10) fonctionne dans un premier sens, au fait que le moteur électrique (10) fonctionne dans un deuxième sens, au fait qu'une limite de déplacement du mécanisme de fermeture a été atteinte pour le premier sens de déplacement, au fait qu'une limite de déplacement du mécanisme de fermeture a été atteinte pour le deuxième sens, à un déclenchement thermique du moteur électrique (10) fonctionnant dans le premier sens ou le deuxième sens, au début d'un état de calage, à un état de quasi-calage, et/ou à un état de calage.

6. Mécanisme de fermeture comportant un système de commande de moteur électrique et un moteur électrique (10) selon l'une quelconque des revendications 1 à 5.

7. Procédé de commande d'un moteur électrique (10) d'un mécanisme de fermeture comprenant la détermination de références pour des formes d'ondes (2-16) acheminées dans des circuits électriques d'un système de commande de moteur électrique, dans lequel l'état relatif d'une pluralité de formes d'ondes est utilisé pour déduire l'état de fonctionnement du moteur électrique (10) du mécanisme de fermeture, dans lequel l'état relatif de la pluralité de formes d'ondes est utilisé pour déduire un ou plusieurs du fait qu'une limite de déplacement du mécanisme de déplacement du mécanisme de fermeture a été atteinte, d'un état de calage ou d'un déclenchement thermique, **caractérisé en ce que** les formes d'ondes sont des formes d'ondes d'une alimentation électrique d'entrée qui ont pour référence un signal de synchronisation.

8. Procédé selon la revendication 7, lequel procédé comprend l'attente d'un signal de déclenchement pour commencer une séquence temporelle, ledit signal de déclenchement étant recherché dans une fenêtre temporelle.
